# FASCICULE DE BREVET EUROPEEN

(11) **EP 2 712 681 B1**
(45) Date de publication et mention de la délivrance du brevet: **02.11.2016**
(21) Numéro de dépôt: 13186018.1
(22) Date de dépôt: 25.09.2013
(51) Int. Cl.: B05B 11/00, B29C 67/00

(54) **Procédé de réalisation d'un corps de pompe pour la distribution d'un produit fluide**
Herstellungsverfahren eines Pumpenkörpers zur Verteilung eines flüssigen Produkts
Method for producing a pump body for dispensing a fluid product

(30) Priorité: 27.09.2012 FR 1259127
(43) Date de publication de la demande: 02.04.2014
(73) Titulaire: Albéa le Tréport, 76470 Le Tréport (FR)
(72) Inventeur: Octau, Jean-Luc, 76630 Intraville (FR); Lasnier, Jacky, 76480 Sainte Marguerite sur Duclair (FR)
(74) Mandataire: Gevers & Orès

(56) Documents cités:
- EP-B1- 1 578 537
- JP-A- H03 154 664
- JP-A- H03 161 066
- US-A- 2 294 568
- US-B1- 6 343 916

## Description

L'invention concerne un procédé de réalisation d'un corps de pompe pour la distribution d'un produit fluide, un corps de pompe réalisé par ce procédé ainsi qu'une pompe comprenant un tel corps.

En particulier, la pompe est destinée à équiper un flacon dans lequel est conditionné le produit, notamment un produit liquide, un gel, une lotion ou une crème, par exemple un produit cosmétique de soin, de maquillage ou de parfumage, ou un produit pharmaceutique. Dans cette application, la pompe est actionnable manuellement pour prélever le produit et le mettre sous pression en vue de sa distribution, par exemple sous la forme d'un aérosol, d'un flot ou d'une noisette de produit.

La pompe comprend un corps présentant un carter dans lequel un gicleur est monté en translation réversible en définissant à l'intérieur dudit carter une chambre de dosage de volume variable. Pour permettre l'alimentation en produit de la chambre de dosage, le carter est pourvu d'un orifice d'entrée en communication avec le produit conditionné, la chambre de dosage présentant un clapet de sortie du produit mis sous pression dans ladite chambre.

L'orifice d'entrée est équipé d'un clapet comprenant une bille qui est retenue dans une cage pour être déplaçable entre une position de fermeture et une position d'ouverture dudit orifice. En particulier, sur une course de distribution du gicleur, la pression dans la chambre de dosage plaque la bille de façon étanche sur l'orifice d'entrée et, sur une course d'aspiration dudit gicleur, la dépression dans la chambre de dosage soulève la bille en position d'ouverture de l'orifice d'entrée pour permettre l'alimentation en produit de ladite chambre.

Pour réaliser un tel corps de pompe, le document EP-1 578 537 prévoit de :
- mouler le carter en formant, sur l'intérieur d'une paroi périphérique surmontant l'orifice d'entrée, des nervures en relief qui s'étendent axialement en étant espacées angulairement, chacune desdites nervures présentant deux faces latérales qui se rejoignent suivant un bord interne pour délimiter la cage entre lesdits bords, ainsi qu'une extrémité supérieure présentant une surface supérieure libre ;
- introduire la bille dans la cage en dessous des extrémités supérieures ;
- déformer plastiquement les extrémités supérieures pour former des visières s'étendant radialement vers l'intérieur du carter, lesdites visières étant agencées pour emprisonner la bille dans la cage.

En particulier, le carter peut être réalisé par injection sous pression d'une matière thermoplastique de type polyoléfine, la ductilité des nervures autorisant alors le matriçage à froid de leur surface supérieure libre. Ainsi, il est possible de combiner une facilité de moulage des nervures axiales avec une fiabilité de la fermeture radiale de la cage pour emprisonner la bille, et ce sans nécessiter de pièce rapportée.

Le document EP-1 578 537 propose que les surfaces supérieures libres des nervures présentent une géométrie plane formant un angle aigu avec la paroi périphérique afin de faciliter le rabattement radial des extrémités supérieures lors de la déformation plastique.

Toutefois, a fortiori aux vitesses industrielles de fabrication de l'ordre de 5 à 10 pièces à la seconde, cette réalisation provoque un fluage brutal de la matière lors du matriçage, fragilisant le bourrelet de matière fluée qui est alors susceptible de se casser en fragments pouvant se mêler au produit distribué.

Par ailleurs, la géométrie des nervures selon l'art antérieur complexifie la réalisation du moule de fabrication du carter, notamment en nécessitant l'utilisation d'un procédé d'électroérosion à l'aide d'électrodes pointues, donc fragiles, pour réaliser en creux les empreintes de moulage desdites nervures.

L'invention vise à perfectionner l'art antérieur en proposant notamment un procédé de réalisation d'un corps de pompe dans lequel on limite les contraintes sur les extrémités supérieures des nervures lors de leur déformation plastique afin de supprimer le risque de fragmentation de matière dans le produit distribué. En particulier, ce perfectionnement est obtenu en pouvant simplifier la réalisation des empreintes de moulage des nervures, notamment par électroérosion à l'aide d'électrodes sans pointes ou en usinant directement lesdites empreintes avec une simple fraise boule.

La réalisation des visières selon l'invention permet également de limiter le fluage tangentiel des extrémités supérieures lors de leur déformation plastique, afin de ne pas réduire la section de passage du produit alimentant la chambre de dosage. Ainsi, on n'augmente pas les pertes de charge, ce qui est particulièrement important pour des produits visqueux tels que des gels ou des crèmes.

A cet effet, selon un premier aspect, l'invention propose un procédé de réalisation d'un corps de pompe pour la distribution d'un produit fluide, ledit corps présentant un carter pourvu d'un orifice d'entrée pour ledit produit qui est équipé d'un clapet comprenant une bille retenue dans une cage pour être déplaçable entre une position de fermeture et une position d'ouverture dudit orifice, ledit procédé prévoyant de :
- mouler le carter en formant, sur l'intérieur d'une paroi périphérique surmontant l'orifice d'entrée, des nervures en relief qui s'étendent axialement en étant espacées angulairement, chacune desdites nervures présentant deux faces latérales qui se rejoignent suivant un bord interne pour délimiter la cage entre lesdits bords, ainsi qu'une extrémité supérieure présentant une surface supérieure libre ;
- introduire la bille dans la cage en dessous des extrémités supérieures ;
- déformer plastiquement les extrémités supérieures pour former des visières s'étendant radialement vers l'intérieur du carter, lesdites visières étant agencées pour emprisonner la bille dans la cage ;
les nervures étant formées afin que leur surface libre s'étende d'un bord latéral à l'autre en formant un dôme présentant un sommet, la déformation plastique des extrémités supérieures étant réalisée par mise en appui d'une matrice sur lesdits sommets puis par déplacement axial de ladite matrice sur une course d'écrasement des dômes.

Selon un deuxième aspect, l'invention propose un corps de pompe réalisé par mise en oeuvre d'un tel procédé, ledit corps présentant un carter pourvu d'un orifice d'entrée pour le produit qui est équipé d'un clapet comprenant une bille retenue dans une cage pour être déplaçable entre une position de fermeture et une position d'ouverture dudit orifice, ledit carter comprenant, sur sa paroi périphérique qui surmonte l'orifice d'entrée, des nervures en relief qui s'étendent axialement en étant espacées angulairement, chacune desdites nervures présentant deux faces latérales qui se rejoignent suivant un bord interne pour former la cage entre lesdits bords ainsi qu'une extrémité supérieure, ladite bille étant emprisonnée dans la cage par des visières qui sont formées sur les extrémités supérieures, lesdites visières formant une extension interne qui est en saillie radiale par rapport au bord interne, les visières présentant une surface supérieure qui est plane ainsi qu'un bord périphérique de géométrie cylindrique qui s'étend radialement depuis la paroi périphérique.

Selon un troisième aspect, l'invention propose une pompe de distribution d'un produit fluide comprenant un tel corps et un gicleur monté en translation réversible dans le carter sur une course de distribution - respectivement d'aspiration - du produit sur laquelle la bille est en position de fermeture - respectivement d'ouverture - de l'orifice d'entrée.

D'autres objets et avantages de l'invention apparaîtront dans la description qui suit, faite en référence aux figures annexées, dans lesquelles :

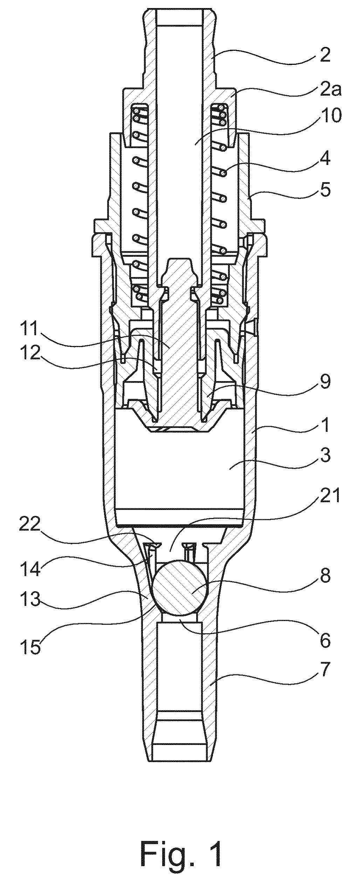

- la figure 1 représente en coupe longitudinale une pompe de distribution selon un mode de réalisation de l'invention ;

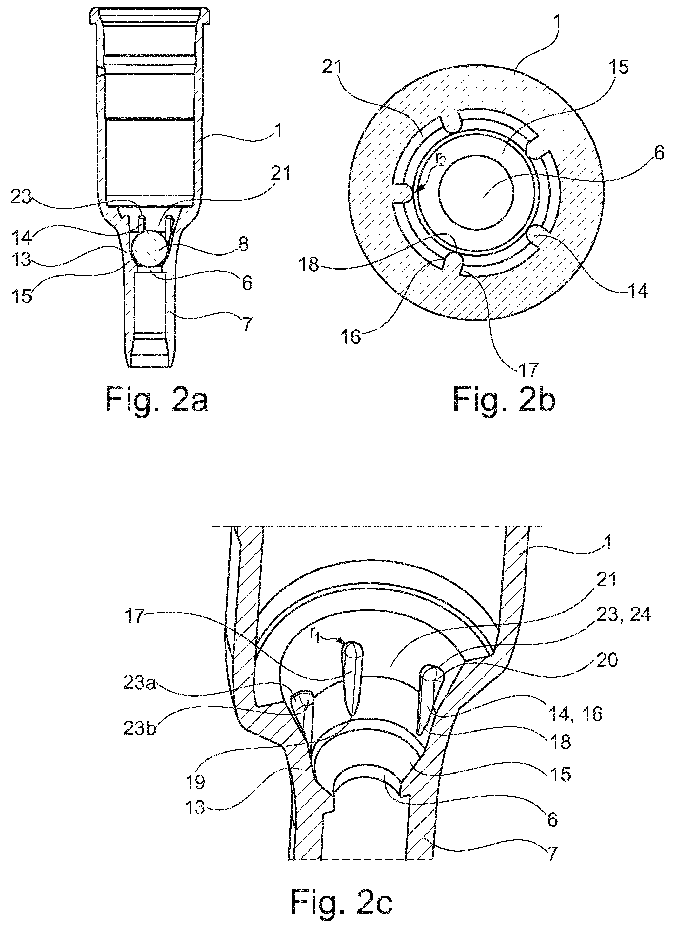

- les figures 2 représentent le corps de la pompe de la figure 1 avant déformation plastique des extrémités supérieures des nervures, respectivement en coupe longitudinale (figure 2a), en coupe transversale (figure 2b) et en perspective coupée (figure 2c), la bille n'étant pas représentée sur les figures 2b et 2c ;

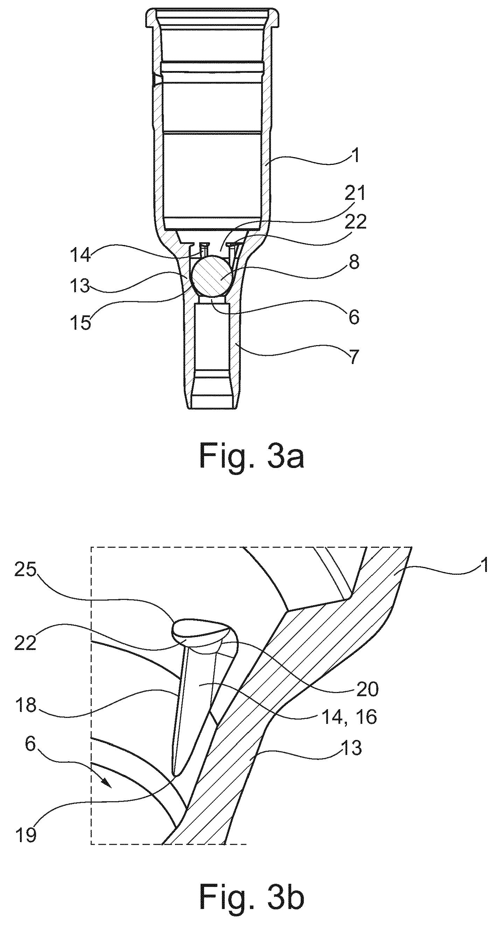

- les figures 3 représentent le corps de la pompe de la figure 1 après déformation plastique des extrémités supérieures des nervures, respectivement en coupe longitudinale (figure 3a) et en perspective partielle coupée (figure 3b), la bille n'étant pas représentée sur la figure 3b.

Dans la description, les termes de positionnement dans l'espace sont pris en référence à la position du corps de pompe représenté sur les figures.

En relation avec les figures, on décrit ci-dessous une pompe de distribution d'un produit fluide. Dans des exemples particuliers, le produit peut être liquide, un gel, une lotion ou une crème, notamment un produit cosmétique de soin, de maquillage ou de parfumage, ou un produit pharmaceutique.

Selon une application préférentielle, la pompe est destinée à équiper un flacon dans le réservoir duquel le produit est conditionné, ladite pompe permettant, par actionnement manuel, de prélever le produit conditionné et de le mettre sous pression en vue de sa distribution, par exemple sous la forme d'un aérosol, d'un flot ou d'une noisette de produit.

La pompe comprend un corps présentant un carter 1 dans lequel un gicleur 2 est monté en translation réversible sur une course de distribution / aspiration du produit en formant dans ledit carter une chambre de dosage 3 de volume variable. En particulier, sur la course de distribution, le volume de la chambre de dosage 3 diminue pour mettre le produit qu'elle contient sous pression et, sur la course d'aspiration, le volume de ladite chambre augmente pour induire une dépression.

De façon conventionnelle, le déplacement du gicleur 2 sur sa course de distribution est actionné par appui sur un bouton poussoir (non représenté), le retour dudit gicleur sur sa course d'aspiration étant obtenu au moyen d'un ressort 4. Dans le mode de réalisation représenté, le corps est équipé d'un extenseur 5 dans lequel le gicleur 2 coulisse, le ressort 4 étant interposé entre une collerette 2a dudit gicleur et ledit extenseur.

La chambre de dosage 3 est alimentée en produit par l'intermédiaire d'un orifice d'entrée 6 qui est en communication avec le produit conditionné. Dans le mode de réalisation représenté, l'orifice d'entrée 6 est formé dans le fond du carter 1, ledit orifice surmontant une tubulure 7 dans laquelle l'extrémité supérieure d'un tube plongeur est destinée à être emmanchée, l'extrémité inférieure dudit tube plongeur étant immergée dans le réservoir.

L'orifice d'entrée 6 est équipé d'un clapet comprenant une bille 8 qui est retenue dans une cage pour être déplaçable entre une position de fermeture représentée sur les figures et une position d'ouverture dudit orifice. En particulier, sur la course de distribution du gicleur 2, la pression dans la chambre de dosage 3 plaque la bille 8 de façon étanche sur l'orifice d'entrée 6 et, sur la course d'aspiration dudit gicleur, la dépression dans la chambre de dosage 3 soulève la bille 8 en position d'ouverture de l'orifice d'entrée 6 pour permettre l'alimentation en produit de ladite chambre.

La chambre de dosage 3 est également équipée d'un clapet de sortie qui peut être formé d'un piston 9 monté sur le gicleur 2 pour, respectivement sur la course de distribution et sur la course d'aspiration dudit gicleur, ouvrir et fermer la communication entre le canal de sortie 10 dudit gicleur et la chambre de dosage 3. Toutefois, l'invention n'est pas limitée à un mode particulier de distribution du produit, notamment relativement au fonctionnement de la pompe.

Dans le mode de réalisation représenté, le gicleur 2 est équipé d'un pointeau 11 et la pression dans la chambre de dosage 3 induit un coulissement relatif dudit pointeau et du piston 9 pour ouvrir des canaux 12 de transfert du produit dans le canal de sortie 10. En outre, le bouton poussoir est monté sur l'extrémité supérieure du gicleur 2 pour mettre en communication ledit canal avec un orifice de distribution.

Le carter 1 comprend une paroi périphérique 13 qui surmonte l'orifice d'entrée 6, ladite paroi présentant des nervures 14 en relief qui s'étendent axialement. En outre, le clapet comprend un siège 15 formé sur l'orifice d'entrée 6, la bille 8 en position de fermeture étant plaquée de façon étanche sur ledit siège et soulevée dudit siège en position d'ouverture. En particulier, le siège 15 présente une géométrie sphérique analogue à celle de la bille 8.

Chaque nervure 14 présente deux faces latérales 16, 17 qui se rejoignent suivant un bord interne 18 pour former la cage entre lesdits bords. En particulier, les nervures 14 présentent une extrémité inférieure 19 qui est disposée au-dessus du siège 15 et une extrémité supérieure 20, le bord interne 18 s'étendant axialement entre lesdites extrémités.

Par ailleurs, la géométrie de l'intérieur de la paroi périphérique 13 est tronconique, la dimension radiale des nervures 14 augmentant de bas en haut pour s'adapter à cette géométrie. En particulier, les bords internes 18 sont inscrits dans une géométrie cylindrique dont le rayon est supérieur à celui de la bille 8 pour permettre son déplacement entre ses positions de fermeture et d'ouverture. De façon avantageuse, le rayon inscrit n'est que légèrement supérieur à celui de la bille 8 afin d'optimiser le fonctionnement du clapet en privilégiant le déplacement axial de ladite bille.

En outre, les nervures 14 sont espacées angulairement pour former entre elles des passages 21 de produit depuis l'orifice d'entrée 6 vers la chambre de dosage 3, lesdits passages présentant une section suffisante pour permettre l'alimentation de la chambre de dosage 3 par aspiration. En particulier, la géométrie des nervures 14 est agencée pour laisser les passages 21 ouverts lorsque la bille 8 est en appui sur les bords internes 18.

La bille 8 est emprisonnée dans la cage par des visières 22 qui sont formées sur les extrémités supérieures 20, lesdites visières formant une extension interne qui est en saillie radiale par rapport au bord interne 18. En particulier, les visières 22 sont inscrites dans une géométrie cylindrique dont le rayon est inférieur à celui de la bille 8. Ainsi, le soulèvement de la bille 8 en position d'ouverture est interrompu par mise en appui axial de ladite bille sous les visières 22.

On décrit ci-dessous un procédé de réalisation d'un corps de pompe dans lequel le carter 1 est moulé, notamment par injection dans un moule d'une matière thermoplastique de type polyoléfine. Le moule est agencé pour former les nervures 14 sur l'intérieur de la paroi périphérique 13, l'extrémité supérieure 20 de chacune desdites nervures présentant une surface supérieure libre.

Ensuite, le procédé prévoit d'introduire la bille 8 dans la cage en dessous des extrémités supérieures 20, notamment en disposant la bille 8 sur le siège 15, puis de déformer plastiquement les extrémités supérieures 20 pour former les visières 22 qui s'étendent radialement vers l'intérieur du carter 1 pour emprisonner la bille 8 dans la cage. En particulier, la ductilité du matériau formant les nervures 14 autorise le matriçage à froid de leur extrémité supérieure 20 afin de déformer lesdites extrémités par fluage de matière.

Les nervures 14 sont formées afin que leur surface libre s'étende d'un bord latéral 16 à l'autre 17 en formant un dôme 23 présentant un sommet 24, la déformation plastique des extrémités supérieures 20 étant réalisée par mise en appui d'une matrice sur lesdits sommets puis par déplacement axial de ladite matrice sur une course d'écrasement des dômes 23.

Ainsi, le fluage de la matière est réalisé à partir du sommet 24 du dôme 23, ce qui limite les contraintes de déformation susceptibles de fragiliser les extrémités supérieures 20 puisque la quantité de matière écrasée augmente progressivement sur la course de la matrice. En outre, le fluage tangentiel de matière est limité par la géométrie en dôme 23 puisqu'elle présente moins de matière sur les côtés, et ce en optimisant le fluage radial, notamment relativement à la quantité de matière fluée radialement, pour fiabiliser la réalisation de visières 22 aptes à emprisonner la bille 8. Enfin, la réalisation des empreintes de moulage est simplifiée puisqu'un dôme 23 en creux peut être réalisé par électroérosion à l'aide d'électrodes sans pointes ou en usinant directement lesdites empreintes avec une simple fraise boule, tout en conservant la facilité de démoulage axial du carter 1.

De façon avantageuse, au moins une partie de la surface libre des dômes 23 présente une géométrie convexe, notamment cylindrique, les sommets 24 pouvant alors s'étendre radialement vers l'intérieur du carter 1 pour favoriser le fluage radial en limitant le fluage tangentiel. En outre, les extrémités supérieures 20 peuvent être déformées de façon avantageuse avec une matrice possédant une surface d'appui sur les sommets 24 qui présente une géométrie plane qui s'étend radialement.

Ainsi, on forme des visières 22 présentant une surface supérieure plane entourée par un bord périphérique 25 de géométrie cylindrique qui s'étend radialement depuis la paroi périphérique 13, ce type de géométrie procurant un bon compromis entre rétention de la bille 8, dimension des passages 21 de produit et limitation des contraintes de déformation.

Dans le mode de réalisation représenté, les dômes 23 présentent une partie de surface libre externe 23a qui est adjacente à la paroi périphérique 13 et une partie de surface libre interne 23b qui est adjacente au bord interne 18. En outre, le sommet 24 s'étend uniquement sur la partie de surface libre externe 23a pour favoriser le fluage radial vers l'intérieur de l'extrémité supérieure 20.

En particulier, la surface libre externe 23a présente une géométrie cylindrique de rayon r₁, les bords internes 18 présentant une géométrie cylindrique de rayon r2. De façon avantageuse, les rayons r₁ et r₂ sont les mêmes pour que la partie de surface libre interne 23b présente une géométrie sphérique. Ainsi, outre l'optimisation du fluage radial vers l'intérieur en limitant les contraintes de déformation, les empreintes de moulage des nervures 14 peuvent être réalisées avec une seule fraise boule.

## Revendications

1. Procédé de réalisation d'un corps de pompe pour la distribution d'un produit fluide, ledit corps présentant un carter (1) pourvu d'un orifice d'entrée (6) pour ledit produit qui est équipé d'un clapet comprenant une bille (8) retenue dans une cage pour être déplaçable entre une position de fermeture et une position d'ouverture dudit orifice, ledit procédé prévoyant de :
- mouler le carter (1) en formant, sur l'intérieur d'une paroi périphérique (13) surmontant l'orifice d'entrée (6), des nervures (14) en relief qui s'étendent axialement en étant espacées angulairement, chacune desdites nervures présentant deux faces latérales (16, 17) qui se rejoignent suivant un bord interne (18) pour délimiter la cage entre lesdits bords, ainsi qu'une extrémité supérieure (20) présentant une surface supérieure libre ;
- introduire la bille (8) dans la cage en dessous des extrémités supérieures (20) ;
- déformer plastiquement les extrémités supérieures (20) pour former des visières (22) s'étendant radialement vers l'intérieur du carter (1), lesdites visières étant agencées pour emprisonner la bille (8) dans la cage ;
ledit procédé étant **caractérisé en ce que** les nervures (14) sont formées afin que leur surface libre s'étende d'un bord latéral (16) à l'autre (17) en formant un dôme (23) présentant un sommet (24), la déformation plastique des extrémités supérieures (20) étant réalisée par mise en appui d'une matrice sur lesdits sommets puis par déplacement axial de ladite matrice sur une course d'écrasement des dômes (23).

2. Procédé selon la revendication 1, **caractérisé en ce que** les sommets (24) s'étendent radialement vers l'intérieur du carter (1).

3. Procédé selon la revendication 1 ou 2, **caractérisé en ce que** les dômes (23) présentent une partie de surface libre externe (23a) qui est adjacente à la paroi périphérique (13) et une partie de surface libre interne (23b) qui est adjacente au bord interne (18), le sommet (24) s'étendant uniquement sur la partie de surface libre externe (23a).

4. Procédé selon l'une quelconque des revendications 1 à 3, **caractérisé en ce qu'**au moins une partie de la surface libre des dômes (23) présente une géométrie convexe.

5. Procédé selon la revendication 3 et 4, **caractérisé en ce que** la partie de surface libre externe (23a) présente une géométrie cylindrique.

6. Procédé selon l'une quelconque des revendications 3 à 5, **caractérisé en ce que** la partie de surface libre interne (23b) présente une géométrie sphérique.

7. Procédé selon l'une quelconque des revendications 1 à 6, **caractérisé en ce que** les bords internes (18) présentent une géométrie cylindrique.

8. Procédé selon les revendications 4 et 7, **caractérisé en ce que** les bords internes (18) et les surfaces libres des dômes (23) présentent une géométrie cylindrique de même rayon (r₁, r₂).

9. Procédé selon l'une quelconque des revendications 1 à 8, **caractérisé en ce que** la matrice possède une surface d'appui sur les sommets (24) qui présente une géométrie plane qui s'étend radialement.

10. Corps de pompe réalisé par mise en oeuvre d'un procédé selon l'une quelconque des revendications 1 à 9, ledit corps présentant un carter (1) pourvu d'un orifice d'entrée (6) pour le produit qui est équipé d'un clapet comprenant une bille (8) retenue dans une cage pour être déplaçable entre une position de fermeture et une position d'ouverture dudit orifice, ledit carter comprenant, sur sa paroi périphérique (13) qui surmonte l'orifice d'entrée (6), des nervures (14) en relief qui s'étendent axialement en étant espacées angulairement, chacune desdites nervures présentant deux faces latérales (16, 17) qui se rejoignent suivant un bord interne (18) pour former la cage entre lesdits bords ainsi qu'une extrémité supérieure (20), ladite bille étant emprisonnée dans la cage par des visières (22) qui sont formées sur les extrémités supérieures (20), lesdites visières formant une extension interne qui est en saillie radiale par rapport au bord interne (18), les visières (22) présentant une surface supérieure qui est plane ainsi qu' un bord périphérique (25) de géométrie cylindrique qui s'étend radialement depuis la paroi périphérique (13).

11. Corps de pompe selon la revendication 10, **caractérisé en ce que** les bords internes (18) sont inscrits dans une géométrie cylindrique dont le rayon est supérieur à celui de la bille (8), les visières (22) étant inscrites dans une géométrie cylindrique dont le rayon est inférieur à celui de la bille (8).

12. Corps de pompe selon la revendication 10 ou 11, **caractérisé en ce que** le clapet comprend un siège (15) formé sur l'orifice d'entrée (6), la bille (8) en position de fermeture étant plaquée de façon étanche sur ledit siège et soulevée dudit siège en position d'ouverture.

13. Pompe de distribution d'un produit fluide comprenant un corps selon l'une quelconque des revendications 10 à 12 et un gicleur (2) monté en translation réversible dans le carter (1) sur une course de distribution - respectivement d'aspiration - du produit sur laquelle la bille (8) est en position de fermeture - respectivement d'ouverture - de l'orifice d'entrée (6).

## Patentansprüche

1. Verfahren zur Herstellung eines Pumpenkörpers für die Verteilung eines Fluidprodukts, wobei der Körper ein Gehäuse (1) aufweist, das mit einer Einlassöffnung (6) für das Produkt versehen ist und mit einem Ventil versehen ist, das eine Kugel (8) umfasst, die in einem Käfig gehalten wird, um zwischen einer geschlossenen Position und einer geöffneten Position der Öffnung verschiebbar zu sein, wobei das Verfahren vorsieht:
- Formen des Gehäuses (1), indem auf der Innenseite einer Umfangswand (13), die über die Einlassöffnung (6) übersteht, Rippen (14) in Relief gebildet werden, die axial voneinander um einen Winkel beabstandet verlaufen, wobei jede der Rippen zwei Seitenflächen (16, 17), die entlang einer inneren Kante (18) miteinander verbunden sind, um den Käfigs zwischen den Kanten zu begrenzen, sowie ein oberes Ende (20) aufweist, das eine freie obere Oberfläche darstellt;
- Einführen der Kugel (8) in den Käfig unter den oberen Enden (20);
- Plastisches Verformen der oberen Enden (20), um Blenden (22) zu bilden, die sich radial ins Innere des Gehäuses (1) erstrecken, wobei die Blenden eingerichtet sind, um die Kugel (8) in dem Käfig einzusperren;
**dadurch gekennzeichnet, dass** die Rippen (14) so ausgebildet sind, dass sich ihre freie Oberfläche von einer seitlichen Kante (16) zu der anderen (17) erstreckt, indem sie eine Kuppel (23) bilden, die eine Spitze (24) aufweist, wobei die plastische Verformung der oberen Enden (20) durch Anpressen einer Matrix an die Spitzen und dann durch eine axiale Verschiebung der Matrix auf einem Weg zum Eindrücken der Kuppeln (23) hergestellt wird.

2. Verfahren nach Anspruch 1, **dadurch gekennzeichnet, dass** die Spitzen (24) sich radial ins Innere des Gehäuses (1) erstrecken.

3. Verfahren nach Anspruch 1 oder 2, **dadurch gekennzeichnet, dass** die Kuppeln (23) einen Teil der äußeren freien Oberfläche (23a), die an die Umfangswand (13) angrenzt, und einen Teil der inneren freien Oberfläche (23b) aufweist, der der inneren Kante (18) benachbart ist, wobei die Spitze (24) sich nur auf einem Teil der äußeren freien Oberfläche (23a) erstreckt.

4. Verfahren nach einem der Ansprüche 1 bis 3, **dadurch gekennzeichnet, dass** zumindest ein Teil der freien Oberfläche der Kuppeln (23) eine konvexe Geometrie aufweist.

5. Verfahren nach Anspruch 3 und 4, **dadurch gekennzeichnet, dass** der Teil der äußeren freien Oberfläche (23a) eine zylindrische Geometrie aufweist.

6. Verfahren nach einem der Ansprüche 3 bis 5, **dadurch gekennzeichnet, dass** der Teil der inneren freien Oberfläche (23b) eine Kugelgeometrie aufweist.

7. Verfahren nach einem der Ansprüche 1 bis 6, **dadurch gekennzeichnet, dass** die inneren Kanten (18) eine zylindrische Geometrie aufweisen.

8. Verfahren nach den Ansprüchen 4 und 7, **dadurch gekennzeichnet, dass** die inneren Kanten (18) und die freien Oberflächen der Kuppeln (23) eine zylindrische Geometrie mit gleichem Radius (r1, r2) aufweisen.

9. Verfahren nach einem der Ansprüche 1 bis 8, **dadurch gekennzeichnet, dass** die Matrix eine Anpressfläche an die Spitzen (24) besitzt, die eine ebene Geometrie aufweist, die sich radial erstreckt.

10. Pumpenkörper, der durch die Durchführung eines Verfahrens nach einem der Ansprüche 1 bis 9 hergestellt wurde, wobei der Körper ein Gehäuse (1) aufweist, das mit einer Einlassöffnung (6) für das Produkt versehen ist, die mit einem Ventil versehen ist, das eine Kugel (8) umfasst, die in einem Käfig gehalten wird, um zwischen einer geschlossenen Position und einer geöffneten Position der Öffnung verschiebbar zu sein, wobei das Gehäuse an seiner Umfangswand (13), die über der Einlassöffnung (6) übersteht, Rippen (14) in Relief umfasst, die sich axial voneinander um einen Winkel beabstandet verlaufen, wobei jede der Rippen zwei Seitenflächen (16, 17), die entlang einer inneren Kante (18) miteinander verbunden sind, um den Käfigs zwischen den Kanten zu begrenzen, sowie ein oberes Ende (20) aufweist, wobei die Kugel in dem Käfig durch Blenden (22) eingesperrt ist, die an den oberen Enden (20) ausgebildet sind, wobei die Blenden eine innere Verlängerung bilden, die radial mit Bezug auf die innere Kante (18) übersteht, wobei die Blenden (22) eine obere Oberfläche, die eben ist, sowie eine Umfangskante (25) mit einer zylindrischen Geometrie aufweisen, die sich radial von der Umfangswand (13) erstreckt.

11. Pumpenkörper nach Anspruch 10, **dadurch gekennzeichnet, dass** die inneren Kanten (18) eine zylindrische Geometrie aufweisen, deren Radius größer als derjenige der Kugel (8) ist, wobei die Blenden (22) eine zylindrische Geometrie aufweisen, deren Radius kleiner als derjenige der Kugel (8) ist.

12. Pumpenkörper nach einem der Ansprüche 10 oder 11, **dadurch gekennzeichnet, dass** das Ventil einen Sitz (15) umfasst, der an der Einlassöffnung (6) ausgebildet ist, wobei die Kugel (8) in der geschlossenen Position dicht auf den Sitz gedrückt wird und in der geöffneten Position des Sitzes angehoben wird.

13. Pumpe zur Verteilung eines Fluidprodukts, das einen Pumpenkörper nach einem der Ansprüche 10 bis 12 und eine Düse (2) umfasst, die reversibel verschiebbar in dem Gehäuse (1) auf einem Verteilungsweg - bzw. Ansaugweg - des Produkts angebracht ist, auf dem die Kugel (8) in geschlossener Position - bzw. geöffneter Position - der Einlassöffnung (6) ist.

## Claims

1. Method of producing a pump body for dispensing a fluid product, the said body having a housing (1) provided with an inlet orifice (6) for the said product, which is equipped with a valve comprising a ball (8) retained in a cage in order to be movable between a closed position and an open position of the said orifice, the said method providing for:
- moulding the housing (1) while forming, on the inside of a peripheral wall (13), above the inlet orifice (6), ribs (14) in relief which run axially, being spaced angularly, each of the said ribs having two side faces (16, 17) which meet at an inner edge (18) to define the cage between the said edges, as well as a top end (20) having a free top surface,
- inserting the ball (8) in the cage, below the top ends (20) and
- plastically deforming the top ends (20) to form peaks (22), running radially towards the inside of the housing (1), the said peaks being arranged to hold the ball (8) captive in the cage,
the said method being **characterised in that** the ribs (14) are formed so that their free surface runs from one side edge (16) to the other (17), forming a dome (23) having a crown (24), the plastic deformation of the top ends (20) being carried out by bringing a die to rest on the said crowns and then by axial displacement of the said die in a stroke for crushing the domes (23).

2. Method according to claim 1, **characterised in that** the crowns (24) run radially towards the inside of the housing (1).

3. Method according to claim 1 or 2, **characterised in that** the domes (23) have an outer free surface portion (23a) which is adjacent to the peripheral wall (13) and an inner free surface portion (23b) which is adjacent to the inner edge (18), the crown (24) running only on the outer free surface portion (23a).

4. Method according to any one of claims 1 to 3, **characterised in that** at least one portion of the free surface of the domes (23) is of convex geometry.

5. Method according to claims 3 and 4, **characterised in that** the outer free surface portion (23a) is of cylindrical geometry.

6. Method according to any one of claims 3 to 5, **characterised in that** the inner free surface portion (23b) is of spherical geometry.

7. Method according to any of claims 1 to 6, **characterised in that** the inner edges (18) are of cylindrical geometry.

8. Method according to claims 4 and 7, **characterised in that** the inner edges (18) and free surfaces of the domes (23) are of cylindrical geometry of the same radius (r₁, r₂).

9. Method according to any one of claims 1 to 8, **characterised in that** the die has a surface for resting on the crowns (24) which is of plane geometry which runs radially.

10. Pump body produced by carrying out a method according to any one of claims 1 to 9, the said body having a housing (1) provided with an inlet orifice (6) for the product, which is equipped with a valve comprising a ball (8) retained in a cage in order to be movable between a closed position and an open position of the said orifice, the said housing comprising, on its peripheral wall (13), which is above the inlet orifice (6), ribs (14) in relief which run axially, being spaced angularly, each of the said ribs having two side faces (16, 17) which meet at an inner edge (18) to form the cage between the said edges, as well as a top end (20), the said ball being captive in the cage due to peaks (22) which are formed on the top ends (20), the said peaks forming an inner extension which protrudes radially from the inner edge (18), the peaks (22) having a top surface which is flat and a peripheral edge (25), of cylindrical geometry, which runs radially from the peripheral wall (13).

11. Pump body according to claim 10, **characterised in that** the inner edges (18) are inscribed in cylindrical geometry, the radius of which is greater than that of the ball (8), the peaks (22) being inscribed in cylindrical geometry, the radius of which is smaller than that of the ball (8).

12. Pump body according to claim 10 or 11, **characterised in that** the valve comprises a seat (15) formed on the inlet orifice (6), the ball (8) in the closed position being forced with a sealing effect on to the said seat and raised from the said seat in the open position.

13. Fluid product dispensing pump comprising a body according to any of claims 10 to 12 and a nozzle (2) fitted for reversible translational motion in the housing (1) on a stroke for dispensing - and suction respectively - of the product, on which the ball (8) is in the closed position - and open position respectively - of the inlet orifice (6).
